# EUROPÄISCHE PATENTSCHRIFT

(11) **EP 3 959 107 B1**
(45) Veröffentlichungstag und Bekanntmachung des Hinweises auf die Patenterteilung: **25.10.2023**
(21) Anmeldenummer: 20715000.4
(22) Anmeldetag: 25.03.2020
(51) Int. Cl.: B60S 1/38

(54) **WISCHLEISTENEINHEIT**
WIPER STRIP UNIT
UNITÉ LAME D'ESSUYAGE

(30) Priorität: 25.04.2019 DE 102019205931
(43) Veröffentlichungstag der Anmeldung: 02.03.2022
(73) Patentinhaber: Robert Bosch GmbH, 70442 Stuttgart (DE)
(72) Erfinder: WYNEN, Paul, 3910 Neerpelt (BE); GOTZEN, Nicolaas, 3070 Kortenberg (BE); CLAESKENS, Philip, 3500 Hasselt (BE); BUSEYNE, Wim, 3500 Hasselt (BE); WILMS, Christian, 3582 Beringen-Koersel (BE)
(86) Internationale Anmeldenummer: PCT/EP2020/058298
(87) Internationale Veröffentlichungsnummer: WO 2020/216560

(56) Entgegenhaltungen:
- EP-A2- 1 970 268
- DE-A1-102005 053 811
- DE-A1-102008 042 004
- GB-A- 2 254 543

## Beschreibung

### Stand der Technik

In den Dokumenten DE 10 2008 042 004 A1 und DE 10 2005 053 811 A1 ist bereits eine Wischleisteneinheit mit zumindest einer Wischlippe, mit zumindest einem Wischgrundkörper und mit zumindest einem Dämpfungselement, welches zwischen der zumindest einen Wischlippe und dem zumindest einen Wischgrundkörper angeordnet ist, und welches dazu vorgesehen ist, ein Umklappen der zumindest einen Wischlippe bei einem Wischvorgang zu dämpfen, wobei ein Abstand zwischen dem zumindest einen Dämpfungselement und dem zumindest einen Wischgrundkörper zu einem freien Ende des zumindest einen Dämpfungselements hin zunimmt, und wobei der zumindest eine Wischgrundkörper auf einer der zumindest einen Wischlippe zugewandten Seite zumindest eine Anschlagfläche aufweist, welche in zumindest einem Betriebszustand einen Anschlag des zumindest einen Dämpfungselements bildet, vorgeschlagen worden.

### Offenbarung der Erfindung

Die Erfindung geht aus von einer Wischleisteneinheit mit zumindest einer Wischlippe, mit zumindest einem Wischgrundkörper und mit zumindest einem Dämpfungselement, welches zwischen der zumindest einen Wischlippe und dem zumindest einen Wischgrundkörper angeordnet ist, und welches dazu vorgesehen ist, ein Umklappen der zumindest einen Wischlippe bei einem Wischvorgang zu dämpfen, wobei ein Abstand zwischen dem zumindest einen Dämpfungselement und dem zumindest einen Wischgrundkörper zu einem freien Ende des zumindest einen Dämpfungselements hin zunimmt, und wobei der zumindest eine Wischgrundkörper auf einer der zumindest einen Wischlippe zugewandten Seite zumindest eine Anschlagfläche aufweist, welche in zumindest einem Betriebszustand einen Anschlag des zumindest einen Dämpfungselements bildet.

Es wird vorgeschlagen, dass die zumindest eine Anschlagfläche zumindest im Wesentlichen konvex geformt ist.

Vorzugsweise soll unter einer "Wischleisteneinheit" zumindest ein Teil, insbesondere eine Unterbaugruppe, eines Wischblatts verstanden werden. Insbesondere soll unter einer "Wischleisteneinheit" eine Einheit aus zumindest einem elastischen Material als Wischgrundkörper mit einer Wischlippe verstanden werden, die dazu vorgesehen ist, zu einer Reinigung einer zu reinigenden Fläche und/oder zu einer Entfernung eines Fluids von der Fläche, insbesondere einer Scheibenfläche, vorzugsweise einer Fahrzeugscheibe und/oder einem Scheinwerferglas, in einem Kontakt über die zu reinigende Fläche bewegt zu werden. Bevorzugt ist die Wischleisteneinheit, insbesondere die Wischlippe und/oder der Wischgrundkörper, aus einem natürlichen oder künstlichen Elastomer, insbesondere aus einem Kunststoff und/oder aus Gummi, hergestellt. Vorzugsweise sind die Wischlippe und der Wischgrundkörper aus dem gleichen Material hergestellt. Vorzugsweise ist die Wischlippe mit dem Wischgrundkörper verbunden ausgebildet. Vorzugsweise ist die Wischlippe einstückig mit dem Wischgrundkörper ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren oder Extrusionsverfahren, beispielsweise auch einem Co-Extrusionsverfahren, und vorteilhaft aus einem einzelnen Rohling. Vorzugsweise soll darunter insbesondere einteilig, besonders bevorzugt in einem Urformprozess hergestellt verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Vorzugsweise verläuft eine Haupterstreckungsrichtung des Wischgrundkörpers zumindest im Wesentlichen parallel zu der Haupterstreckungsrichtung der Wischlippe und/oder der Wischleisteneinheit.

Unter einer "Wischlippe" soll in diesem Zusammenhang insbesondere eine elastische Lippe verstanden werden, die dazu vorgesehen ist, mit einer Wischkante eine Scheibe, insbesondere eine Fahrzeugscheibe, zu überstreichen, zu wischen und/oder zu reinigen. Unter "elastisch" soll in diesem Zusammenhang insbesondere verstanden werden, dass ein Objekt wiederholt verformbar ist, ohne dass dadurch das Objekt mechanisch beschädigt oder zerstört wird, und das insbesondere nach einer Verformung selbstständig wieder einer Grundform zustrebt. Insbesondere ist die Wischlippe zu einem direkten Kontakt mit der Oberfläche, insbesondere einer Fahrzeugscheibe, vorgesehen. Insbesondere ist die Wischlippe dazu vorgesehen, zumindest unter Krafteinwirkung, beispielsweise durch eine Federschiene des Wischblatts, sich an eine Form der Oberfläche anzupassen. Vorzugsweise erstreckt sich die Wischlippe zumindest im Wesentlichen parallel zu einer Haupterstreckungsrichtung der Wischleisteneinheit. Unter einer "Haupterstreckungsrichtung" eines Objekts soll vorzugsweise eine Richtung verstanden werden, welche parallel zu einer Richtung einer längsten Seite eines kleinsten Quaders verläuft, welcher das Objekt vollständig umschließt. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Vorzugsweise ist der Wischgrundkörper zumindest in einem Betriebszustand der Wischleisteneinheit berührungsfrei gegenüber der Oberfläche, insbesondere der Fahrzeugscheibe, angeordnet.

Vorzugsweise weist der Wischgrundkörper eine der Wischlippe zugewandte Seite, insbesondere Außenseite, auf, welche in zumindest einem Betriebszustand der Wischleisteneinheit der zu reinigenden Fläche zugewandt ist, und welche zumindest teilweise, insbesondere zumindest zu 50%, bevorzugt zu mindestens 70%, besonders bevorzugt vollständig, die zumindest eine Anschlagfläche ausbildet. Unter einer "Anschlagfläche" soll vorzugsweise eine von einer Außenseite gebildete Außenfläche eines Objektes verstanden werden, welche dazu vorgesehen ist, in einem Betriebszustand einen Anschlag mit einem weiteren Objekt zu bilden. Vorzugsweise ist die zumindest eine Anschlagfläche in zumindest einem Betriebszustand berührungsfrei gegenüber weiteren Objekten ausgebildet. Vorzugsweise weist der Wischgrundkörper zumindest zwei sich in Wischrichtung gegenüber angeordnete Anschlagflächen auf. Vorzugsweise sind die zumindest zwei Anschlagflächen auf einer dem Dämpfungselement zugewandten Seite des Wischgrundkörpers angeordnet. Unter "im Wesentlichen konvex" soll verstanden werden, dass ein Objekt, insbesondere eine Fläche, beispielsweise eine Außenfläche eines Objektes, ungeachtet eventueller Fertigungs- und/oder Montagetoleranzen der Oberflächenrauigkeit, zumindest zu 50%, bevorzugt zumindest zu 70%, konvex geformt ist.

Bevorzugt ist der Wischgrundkörper der Wischleisteneinheit dazu ausgebildet, eine Federschiene zu einer Stabilisierung aufzunehmen. Zur Aufnahme der Federschiene bildet die Wischleisteneinheit insbesondere zumindest teilweise und vorzugsweise vollständig eine Federschienenaufnahme aus. Unter einer "Federschienenaufnahme" soll in diesem Zusammenhang insbesondere ein Kanal oder eine Nut verstanden werden, der/die dazu vorgesehen ist, die Federschiene zumindest teilweise aufzunehmen. Vorzugsweise ist die Federschienenaufnahme dazu vorgesehen, die Federschiene zumindest über einen wesentlichen Teil einer Haupterstreckungsrichtung wesentlich zu umgreifen. Vorzugsweise bildet die Wischleisteneinheit zwei als seitliche Aufnahmenuten ausgebildete Federschienenaufnahmen aus, welche zu einer teilweisen Aufnahme von jeweils zumindest einer Federschiene vorgesehen sind. Alternativ oder zusätzlich kann die Wischleisteneinheit zumindest eine als Federschienenkanal ausgebildete Federschienenaufnahme ausbilden, welche zu einer im Wesentlichen vollständigen Aufnahme der zumindest einen Federschiene vorgesehen ist. Unter "im Wesentlichen vollständig" soll vorzugsweise zumindest zu 50%, bevorzugt wenigstens zu 70% verstanden werden. Durch die zumindest eine Federschienenaufnahme ist die zumindest eine Wischleisteneinheit mit der zumindest einen Federschiene verbindbar ausgebildet. Vorzugsweise ist die Wischleisteneinheit formschlüssig, insbesondere kraftschlüssig mit der Federschiene verbunden. Vorzugsweise erstreckt sich die Federschienenaufnahme zumindest im Wesentlichen parallel zu einer Haupterstreckungsrichtung des Wischgrundkörpers und/oder der Wischleisteneinheit, insbesondere der Wischlippe. Die Abmessungen der zumindest einen Federschienenaufnahme sind an die Form und Größe der zumindest einen Federschiene angepasst. Unter "vorgesehen" soll insbesondere speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Betriebszustand" soll in diesem Zusammenhang insbesondere ein Zustand verstanden werden, in dem die Wischblattvorrichtung betriebsbereit für einen Wischvorgang und/oder einen Wischbetrieb ist und/oder sich in einem Wischbetrieb befindet, in welchem die Wischleisteneinheit insbesondere über eine Fahrzeugscheibe geführt ist und dabei vorteilhaft an der Fahrzeugscheibe anliegt.

Unter einer "Federschiene" soll insbesondere ein makroskopisches Element verstanden werden, das zumindest eine Erstreckung aufweist, die in einem normalen Betriebszustand und/oder montierten Zustand um zumindest 10 %, insbesondere um wenigstens 20 %, vorzugsweise um mindestens 40 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einem "montierten Zustand" soll in diesem Zusammenhang insbesondere ein Zustand verstanden werden, in dem die Wischblattvorrichtung betriebsbereit für einen Wischvorgang und/oder einen Wischbetrieb ist. Insbesondere ist die Wischblattvorrichtung in einem montierten Zustand an einem Wischarm angeordnet und/oder mit einem Wischarm gekoppelt, wobei insbesondere zwischen dem Wischarm und der Wischblattvorrichtung eine mechanische, elektrische und/oder eine fluidtechnische Kopplung besteht. Vorzugsweise ist die zumindest eine Federschiene zumindest teilweise aus einem Metall ausgebildet. Alternativ oder zusätzlich ist vorstellbar, dass die Federschiene zumindest teilweise aus einem Kunststoff, aus einem Verbundwerkstoff oder aus einem anderen, einem Fachmann als sinnvoll erscheinenden Material ausgebildet ist. Vorzugsweise ist die Federschiene zumindest teilweise aus einem Federstahl ausgebildet. Vorzugsweise weist die Federschiene in einem unbelasteten Zustand zumindest im Wesentlichen eine Form eines gebogenen Stabs und besonders vorteilhaft eines abgeflachten gebogenen Stabs auf. Die Federschiene kann einteilig oder mehrteilig ausgebildet sein. Vorzugsweise ist eine Krümmung der Federschiene längs der Federschiene in einem unbelasteten Zustand größer als eine Krümmung einer Fahrzeugscheibenoberfläche eines Kraftfahrzeugs, insbesondere einer Fahrzeugscheibe, über welche die Federschiene in wenigstens einem Betriebszustand und/oder montierten Zustand geführt wird.

Unter einem "Dämpfungselement" soll vorzugsweise ein Element verstanden werden, welches dazu vorgesehen ist, einen Anschlag eines ersten Objekts gegen ein weiteres Objekt, insbesondere durch elastische Verformung, abzudämpfen. Vorzugsweise dämpft das Dämpfungsobjekt in zumindest einem Betriebszustand einen Wischvorgang, insbesondere einen Anschlag der Wischlippe an einem weiteren Objekt, insbesondere durch elastische Verformung. Vorzugsweise ist das Dämpfungselement aus einem natürlichen oder künstlichen Elastomer, insbesondere aus einem Kunststoff und/oder aus Gummi ausgebildet. Vorzugsweise ist das zumindest eine Dämpfungselement aus demselben Material ausgebildet wie die zumindest eine Wischlippe und/oder der zumindest eine Wischgrundkörper. Das zumindest eine Dämpfungselement ist mit der zumindest einen Wischlippe verbunden, insbesondere einstückig, ausgebildet. Das zumindest eine Dämpfungselement ist mit dem zumindest einen Wischgrundkörper verbunden, insbesondere einstückig, ausgebildet. Das zumindest eine Dämpfungselement weist in Wischrichtung eine maximale Erstreckung auf, welche im Wesentlichen der maximalen Erstreckung des Wischgrundkörpers entspricht. Unter einer "Wischrichtung" soll vorteilhaft eine Richtung verstanden werden, in welche sich das Wischblatt über eine Fläche, vorzugsweise eine Scheibe, insbesondere Fahrzeugscheibe, in zumindest einem Betriebszustand und/oder montierten Zustand bewegt. Insbesondere verläuft die Wischrichtung senkrecht zu einer Längserstreckung der Wischleiste, sowie parallel zur zu wischenden Fahrzeugscheibe. Darunter, dass die Wischrichtung nach oben/unten orientiert ist, soll insbesondere verstanden werden, dass die Wischrichtung zumindest eine in Bezug auf ein Fahrzeug nach oben/unten orientierte Bewegungskomponente aufweist. Darunter, dass zwei Größen einander "im Wesentlichen entsprechen" soll insbesondere verstanden werden, dass ein kleinstes bildbares Verhältnis beider Größen zumindest größer 0,25, bevorzugt größer 0,5, besonderes bevorzugt größer 0,75 und kleiner 2, bevorzugt kleiner 1,5, besonders bevorzugt kleiner 1,25 ist. Das zumindest eine Dämpfungselement weist in Wischrichtung eine maximale Erstreckung auf, welche größer ist als die maximale Erstreckung der Wischlippe in Wischrichtung.

Durch die erfindungsgemäße Ausgestaltung der Wischleisteneinheit kann vorteilhaft ein energiearmes Anschlagen der Wischlippe am Dämpfungselement erreicht werden. Vorteilhaft kann ein Anschlag der Wischlippe, insbesondere mit großer Energie, am Wischgrundkörper vermieden werden. Vorteilhaft kann dadurch erreicht werden, dass ein einziger Anschlag, insbesondere die Energie eines einzigen Anschlags, der Wischlippe am Wischgrundkörper in zumindest zwei Teilanschläge, insbesondere Teilenergien, der Wischlippe am Dämpfungselement und des Dämpfungselements am Wischgrundkörper aufgeteilt wird. Es kann weiterhin ein progressives Blockieren und ein rollendes Dämpfungselement erreicht werden. Dadurch kann vorteilhaft wenig Energie bei einem Anschlag freigesetzt werden. Insbesondere kann ein Anschlagspunkt zwischen dem Dämpfungselement und dem Wischgrundkörper durch die konvexe Form der Anschlagfläche über die Anschlagfläche verteilt werden. Vorteilhaft kann dadurch ein Anschlag des Dämpfungselements an dem Wischgrundkörper kontinuierlich abgedämpft werden bis das Dämpfungselement im Wesentlichen vollständig an der Anschlagfläche anliegt und/oder versteift. Insbesondere kann eine Wischleisteneinheit bereitgestellt werden, mit der vorteilhaft geräuscharme Wischbewegungen durchgeführt werden können. Vorteilhaft kann eine höhere Robustheit der Wischleisteneinheit gegenüber Belastungen erreicht werden. Insbesondere kann die Funktion des Kontaktwinkels der Wischlippe auf eine Scheibe gegenüber der Anpresskraft zwischen einem ersten Anschlag des Dämpfungselements am Wischgrundkörper und einer vollständigen Blockade des Dämpfungselements mit einem im Wesentlichen gebrochen rationalen Verlauf beschrieben werden.

Des Weiteren wird vorgeschlagen, dass das zumindest eine Dämpfungselement in Richtung der zumindest einen Wischlippe zumindest im Wesentlichen konkav geformt ist. Unter "im Wesentlichen konkav" soll verstanden werden, dass ein Objekt, insbesondere eine Fläche, beispielsweise eine Außenfläche eines Objektes, ungeachtet eventueller Fertigungs- und/oder Montagetoleranzen der Oberflächenrauigkeit, zumindest zu 50%, bevorzugt zumindest zu 70%, konkav geformt ist. Insbesondere ist die dem Wischgrundkörper zugewandte Außenseite des Dämpfungselements in Richtung des Wischgrundkörpers konvex geformt. Insbesondere ist die dem Wischgrundkörper zugewandte Außenseite des Dämpfungselements in Richtung des Wischgrundkörpers konvex geformt. Insbesondere ist die der Wischlippe zugewandte Außenseite des Dämpfungselements in Richtung der Wischlippe konkav geformt. Dadurch kann das Dämpfungselement bei einem Wischvorgang einen vorteilhaften Dehnungsspielraum bei einem forcierten Übergang aus einer konkaven Form in eine konvexe Form bereitstellen. Vorteilhaft kann dadurch ein Anschlag des Dämpfungselements an dem Wischgrundkörper besonders geräuscharm ausgebildet werden. Vorteilhaft kann das Dämpfungselement eine optimierte Energieaufnahme, insbesondere von Belastungsenergie, gewährleisten. Dadurch kann eine Verformungsenergie beim Umklappen der Wischlippe am Umschlagpunkt eines Wischvorgangs genutzt werden, um ein vorteilhaftes Umklappen der Wischlippe zu erreichen.

Erfindungsgemäß weist die Wischleisteneinheit zumindest einen Fortsatz auf, welcher zumindest teilweise in Richtung der zumindest einen Wischlippe aus einer ersten Anschlagfläche des zumindest einem Wischgrundkörpers ragt. Der zumindest eine Fortsatz ist vorzugsweise aus einem natürlichen oder künstlichen Elastomer, insbesondere aus einem Kunststoff und/oder aus Gummi ausgebildet. Vorzugsweise ist der zumindest eine Fortsatz aus demselben Material ausgebildet wie der zumindest eine Wischgrundkörper und/oder die zumindest eine Wischlippe. Vorzugsweise ist der zumindest eine Fortsatz einstückig, insbesondere einteilig, mit dem Wischgrundkörper ausgebildet. Vorzugsweise ist der zumindest eine Fortsatz dazu vorgesehen, eine Distanz zwischen dem Wischgrundkörper und dem Dämpfungselement zu verringern. Vorzugsweise ist der zumindest eine Fortsatz beabstandet von zumindest einem in einer der beiden Wischrichtungen gelegenen Rand der zumindest einen Anschlagfläche angeordnet. Alternativ ist denkbar, dass der Fortsatz an einem in Wischrichtung gelegenen Rand der zumindest einen Anschlagfläche angeordnet ist. Vorzugsweise ist die dem Dämpfungselement zugewandte Seite, insbesondere Außenfläche, des zumindest einen Fortsatzes abgerundet, insbesondere konvex, ausgebildet. Vorteilhaft kann eine Distanz zwischen dem Wischgrundkörper und dem Dämpfungselement dahingehend verringert werden, dass ein vorzeitiger Anschlag des Dämpfungselements an dem Wischgrundkörper ausgebildet wird. Vorteilhaft kann dadurch erreicht werden, dass ein Anschlag des Dämpfungselements an dem Wischgrundkörper energiearm ausgebildet ist. Dadurch kann ein besonders vorteilhaft geräuschloses Umklappen der Wischlippe bei einem Wischvorgang erreicht werden.

Erfindungsgemäß weist die Wischleisteneinheit zumindest einen weiteren Fortsatz auf, welcher zumindest teilweise in Richtung der zumindest einen Wischlippe aus einer zweiten Anschlagfläche des zumindest einen Wischgrundkörpers ragt. Der zumindest eine weitere Fortsatz ist vorzugsweise aus einem natürlichen oder künstlichen Elastomer, insbesondere aus einem Kunststoff und/oder aus Gummi ausgebildet. Vorzugsweise ist der zumindest eine weitere Fortsatz aus demselben Material ausgebildet wie der zumindest eine Wischgrundkörper und/oder die zumindest eine Wischlippe. Vorzugsweise ist der zumindest eine weitere Fortsatz einstückig, insbesondere einteilig, mit dem Wischgrundkörper ausgebildet. Vorzugsweise ist der zumindest eine weitere Fortsatz dazu vorgesehen, eine Distanz zwischen dem Wischgrundkörper und dem Dämpfungselement zu verringern. Vorzugsweise ist der zumindest eine weitere Fortsatz beabstandet von zumindest einem in einer der beiden Wischrichtungen gelegenen Rand der zumindest einen Anschlagfläche angeordnet. Alternativ ist denkbar, dass der weitere Fortsatz an einem in Wischrichtung gelegenen Rand der zumindest einen Anschlagfläche angeordnet ist. Vorzugsweise ist die dem Dämpfungselement zugewandte Seite, insbesondere Außenfläche, des zumindest einen weiteren Fortsatzes abgerundet, insbesondere konvex, ausgebildet. Vorteilhaft kann eine Distanz zwischen dem Wischgrundkörper und dem Dämpfungselement auf einer dem zumindest einen Fortsatz in Wischrichtung gegenüberliegenden Seite dahingehend verringert werden, dass ein vorzeitiger Anschlag des Dämpfungselements an dem Wischgrundkörper ausgebildet wird. Vorteilhaft kann dadurch erreicht werden, dass ein Anschlag des Dämpfungselements an dem Wischgrundkörper auf einer dem ersten Fortsatz in Wischrichtung gegenüberliegenden Seite energiearm ausgebildet ist. Dadurch kann ein besonders vorteilhaft geräuschloses Umklappen der Wischlippe aus beiden Wischrichtungen bei einem Wischvorgang erreicht werden.

Erfindungsgemäß sind an jeder der zumindest zwei Anschlagflächen des zumindest einen Wischgrundkörpers zumindest zwei Fortsätze und/oder weitere Fortsätze angeordnet. Vorzugsweise sind die zumindest zwei Fortsätze und/oder weitere Fortsätze an jeder Anschlagfläche in Wischrichtung versetzt zueinander, insbesondere nebeneinander, angeordnet. Vorzugsweise weisen die zumindest zwei Fortsätze und/oder weitere Fortsätze an jeder
Anschlagfläche unterschiedliche minimale Abstände zu dem zumindest einen Dämpfungselement auf. Vorteilhaft kann dadurch erreicht werden, dass ein Anschlag des Dämpfungselements an dem Wischgrundkörper stufenweise erfolgt. Dadurch kann ein Umklappen der Wischlippe bei einem Wischvorgang vorteilhaft gedämpft werden. Dadurch kann ein geräuscharmer und/oder materialschonender Wischvorgang ausgebildet werden.

Des Weiteren wird vorgeschlagen, dass sich die zumindest zwei Fortsätze und/oder weiteren Fortsätze an jeder Anschlagfläche in Wischrichtung zusammen im Wesentlichen über eine gesamte Erstreckung der jeweiligen Anschlagfläche erstrecken. Vorzugsweise weist jede Anschlagfläche zumindest zwei, insbesondere zumindest vier, bevorzugt genau vier, Fortsätze und/oder weitere Fortsätze auf. Darunter, dass sich ein Objekt "im Wesentlichen über eine gesamte Erstreckung erstreckt" soll verstanden werden, dass das Objekt sich zumindest über 50%, bevorzugt zumindest über 75%, besonders bevorzugt zumindest über 90%, der Erstreckung erstreckt. Vorteilhaft kann dadurch eine Anschlagsfolge des Dämpfungselements mit dem zumindest einen Wischgrundkörper an den zumindest zwei Fortsätzen und/oder weiteren Fortsätzen erzielt werden. Vorteilhaft kann dadurch ein stufenweiser Energieübertrag erreicht werden.

Des Weiteren wird vorgeschlagen, dass sich der zumindest eine Fortsatz und/oder weitere Fortsatz im Wesentlichen über eine gesamte Haupterstreckung des Wischgrundkörpers erstreckt. Vorzugsweise weist der zumindest eine Fortsatz und/oder weitere Fortsatz eine glatte Oberfläche, insbesondere Außenfläche, auf. Vorzugsweise weist der zumindest eine Fortsatz und/oder zumindest eine weitere Fortsatz in jedem Querschnitt entlang einer Ebene senkrecht zur Haupterstreckung des Wischgrundkörpers die gleich Form auf. Vorteilhaft kann dadurch ein gleichmäßiges Anschlagen des Dämpfungselements an dem zumindest einen Fortsatz und/oder weiteren Fortsatz bei einem Wischvorgang erreicht werden. Vorteilhaft kann eine Geräuschbelastung reduziert werden.

Des Weiteren wird vorgeschlagen, dass die Wischleisteneinheit zumindest zwei Verbindungsstege aufweist, wobei ein erster Verbindungsteg den zumindest einen Wischgrundkörper mit dem zumindest einen Dämpfungselement verbindet und ein zweiter Verbindungssteg das zumindest eine Dämpfungselement mit der zumindest einen Wischlippe verbindet, wobei der erste Verbindungssteg sich in eine Richtung senkrecht zu einer Wischrichtung und senkrecht zu einer Haupterstreckung des Wischgrundkörpers weniger als 1 mm erstreckt. Vorzugsweise sind die Verbindungsstege aus einem natürlichen oder künstlichen Elastomer, insbesondere aus einem Kunststoff und/oder aus Gummi ausgebildet. Vorzugsweise sind die Verbindungsstege aus demselben Material ausgebildet wie der zumindest eine Wischgrundkörper und/oder die zumindest eine Wischlippe. Vorzugsweise sind die Verbindungsstege einstückig, insbesondere einteilig, mit dem Wischgrundkörper ausgebildet. Vorzugsweise weisen die Verbindungsstege in Wischrichtung eine kleinere maximale Erstreckung auf als der Wischgrundkörper und/oder die Wischlippe. Vorzugsweise weist der erste Verbindungssteg einen mittleren Bereich auf, welcher von dem Wischgrundkörper und dem Dämpfungselement beabstandet ist. Vorzugsweise weist der erste Verbindungssteg zwei Befestigungsbereiche auf, in welchen der Verbindungssteg mit dem Wischgrundkörper oder dem Dämpfungselement verbunden ist. Vorzugsweise weist der zweite Verbindungssteg einen mittleren Bereich auf, welcher von der Wischlippe und dem Dämpfungselement beabstandet ist. Vorzugsweise weist der zweite Verbindungssteg zwei Befestigungsbereiche auf, in welchen der Verbindungssteg mit der Wischlippe oder dem Dämpfungselement verbunden ist. Vorzugsweise weisen die mittleren Bereiche der Verbindungsstege in Wischrichtung eine kleinere maximale Erstreckung auf als die Befestigungsbereiche des jeweiligen Befestigungsstegs. Vorzugsweise erstreckt sich der erste Verbindungssteg in eine Richtung senkrecht zur Wischrichtung und senkrecht zur Haupterstreckung des Wischgrundkörpers weniger als 0,75 mm, bevorzugt weniger als 0,5 mm, besonders bevorzugt weniger als 0,25 mm. Vorteilhaft kann dadurch erreicht werden, dass die Wischleisteneinheit in Richtung der Wischlippe eine zunehmende Flexibilität in Wischrichtung aufweist. Dadurch kann ein vorteilhafter Wischprozess erreicht werden.

Des Weiteren wird vorgeschlagen, dass der zweite Verbindungssteg in Wischrichtung zumindest im Wesentlichen konkav geformte Außenflächen aufweist. Vorteilhaft kann dadurch eine erhöhte Flexibilität in einem wischlippennahen Bereich der Wischleisteneinheit erreicht werden. Vorteilhaft kann dadurch eine erhöhte Flexibilität bei sichergestellter Stabilität in einem wischlippennahen Bereich der Wischleisteneinheit erreicht werden. Dadurch kann ein materialschonender Wischvorgang ermöglicht werden.

Des Weiteren wird ein Wischblatt mit einer erfindungsgemäßen Wischleisteneinheit vorgeschlagen.

Die erfindungsgemäße Wischleisteneinheit und/oder das erfindungsgemäße Wischblatt sollen/soll hierbei nicht auf die oben beschriebene Anwendung und Ausführungsform beschränkt sein. Insbesondere können/kann die erfindungsgemäße Wischleisteneinheit und/oder das erfindungsgemäße Wischblatt zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Wischblatts mit einer erfindungsgemäßen Wischleisteneinheit,
- Fig. 2: eine schematische Darstellung einer Wischleisteneinheit in einer Schnittdarstellung,
- Fig. 3: eine weitere Wischleisteneinheit in einer schematischen Schnittdarstellung,
- Fig. 4: eine weitere Wischleisteneinheit in einer schematischen Schnittdarstellung und
- Fig. 5: eine erfindungsgemäße Wischleisteneinheit in einer schematischen Schnittdarstellung.

### Beschreibung der Ausführungsbeispiele

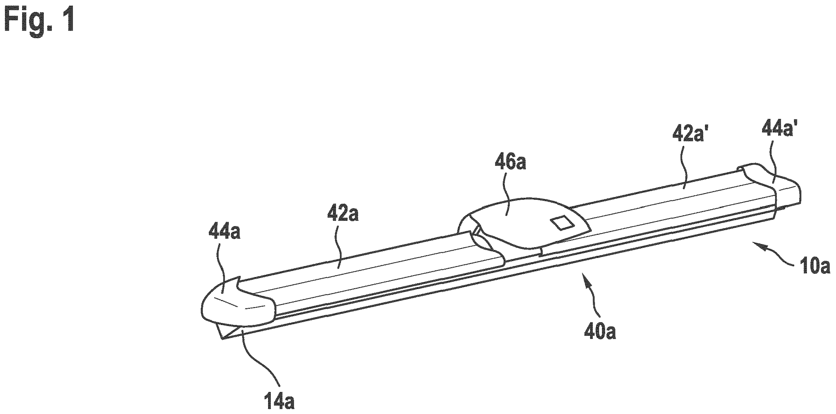

Figur 1 zeigt ein Wischblatt 40a in einer schematischen Draufsicht. Das Wischblatt 40a weist eine Wischleisteneinheit 10a auf. In Figur 1 ist gezeigt, dass die Wischleisteneinheit 10a eine Wischlippe 14a umfasst. Das Wischblatt 40a umfasst zudem beispielsweise jeweils zwei Endkappen 44a, 44a' und zwei Windabweisereinheiten 42a, 42a'. Das Wischblatt 40a umfasst außerdem beispielsweise einen Wischblattadapter 46a.

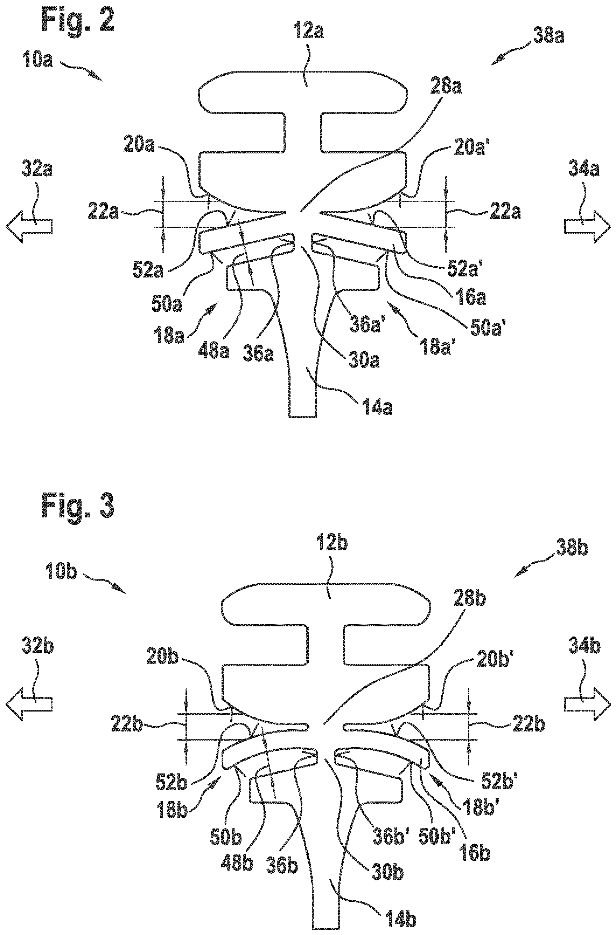

Figur 2 zeigt einen Querschnitt der Wischleisteneinheit 10a, insbesondere entlang einer Schnittebene senkrecht zur Haupterstreckungsrichtung der Wischleisteneinheit 10a. Die Wischleisteneinheit 10a umfasst zumindest einen Wischgrundkörper 12a. Die Wischleisteneinheit 10a umfasst zumindest eine Wischlippe 14a. Die Wischleisteneinheit 10a umfasst zumindest ein Dämpfungselement 16a. Das Dämpfungselement 16a ist zwischen der zumindest einen Wischlippe 14a und dem zumindest einen Wischgrundkörper 12a angeordnet. Die Wischleisteneinheit 10a weist zumindest zwei Verbindungsstege 28a, 30a auf. Ein erster Verbindungsteg 28a verbindet den zumindest einen Wischgrundkörper 12a mit dem zumindest einen Dämpfungselement 16a. Ein zweiter Verbindungssteg 30a verbindet das zumindest eine Dämpfungselement 16a mit der zumindest einen Wischlippe 14a. Der erste Verbindungssteg 28a ist einstückig mit dem Wischgrundkörper 12a ausgebildet. Der erste Verbindungssteg 28a ist einstückig mit dem Dämpfungselement 16a ausgebildet. Der zweite Verbindungssteg 30a ist einstückig mit der Wischlippe 14a ausgebildet. Der zweite Verbindungssteg 30a ist einstückig mit dem Dämpfungselement 16a ausgebildet.

Die Wischleisteneinheit 10a, insbesondere die Wischlippe 14a, der erste und der zweite Verbindungssteg 28a, 30a, das Dämpfungselement 16a und der Wischgrundkörper 12a, sind einstückig, insbesondere aus dem gleichen Material wie etwa einem natürlichen oder künstlichen Elastomer, insbesondere einem Kunststoff und/oder Gummi, hergestellt.

Die Wischlippe 14a weist eine Haupterstreckung auf, welche der Haupterstreckung des Wischgrundkörpers 12a entspricht. Die Wischlippe 14a erstreckt sich im Wesentlichen gleich weit wie, insbesondere etwas weiter als, der Wischgrundkörper 12a in eine Richtung senkrecht zur Haupterstreckungsrichtung der Wischleisteneinheit 10a und senkrecht zu einer Wischrichtung 32a, 34a. Die Wischlippe 14a weist in zumindest eine der Wischrichtungen 32a, 34a eine kleinere maximale Erstreckung auf als der Wischgrundkörper 12a. Die Wischlippe 14a weist im Querschnitt, insbesondere entlang einer Ebene senkrecht zur Haupterstreckungsrichtung der Wischlippe 14a, eine im Wesentlichen dreieckige, insbesondere im Wesentlichen T-förmige, Form auf.

Ein Abstand 22a zwischen dem zumindest einen Dämpfungselement 16a und dem zumindest einen Wischgrundkörper 12a nimmt zu einem freien Ende 18a, 18a' des zumindest einen Dämpfungselement 16a hin zu. Ein Abstand 48a zwischen dem zumindest einen Dämpfungselement 16a und dem zumindest einen Wischgrundkörper 12a bleibt in Richtung des freien Endes 18a, 18a' des Dämpfungselements 16a im Wesentlichen konstant. Das Dämpfungselement 16a ist dazu vorgesehen, ein Umklappen der zumindest einen Wischlippe 14a bei einem Wischvorgang zu dämpfen. Das Dämpfungselement 16a erstreckt sich in die Wischrichtungen 32a, 34a im Wesentlichen gleich weit wie der Wischgrundkörper 12a. Eine der Wischlippe 14a zugewandte Außenfläche 50a, 50a' des Dämpfungselements 16a ist in Richtung der Wischlippe 14a im Wesentlichen eben geformt. Eine der Wischlippe 14a abgewandte Außenfläche 52a, 52a' des Dämpfungselements 16a ist in Richtung des Wischgrundkörpers 12a im Wesentlichen eben geformt.

Der Wischgrundkörper 12a umfasst zumindest eine Federschienenaufnahme 38a. Die Federschienenaufnahme 38a ist zu einer Aufnahme von zwei Federschienen vorgesehen. Insbesondere ist die Federschienenaufnahme 38a in Umfangsrichtung offen ausgebildet. Insbesondere umfasst die Federschienenaufnahme 38a zumindest zwei Teilbereiche, die insbesondere an einander gegenüberliegenden Seiten der Wischleisteneinheit 10a, insbesondere des Wischgrundkörpers 12a, angeordnet sind. Der Wischgrundkörper 12a weist im Querschnitt, insbesondere entlang einer Ebene senkrecht zur Haupterstreckungsrichtung des Wischgrundkörpers 12a, eine im Wesentlichen rechteckige, insbesondere in Abhängigkeit von der Federschienenaufnahme 38a auch eine H-förmige, Form auf.

Der Wischgrundkörper 12a weist auf einer der zumindest einen Wischlippe 14a zugewandten Seite zumindest eine Anschlagfläche 20a, 20a' auf. Der Wischgrundkörper 12a weist auf einer der zumindest einen Wischlippe 14a zugewandten Seite zwei Anschlagflächen 20a, 20a' auf. Die Anschlagfläche 20a, 20a' bildet in zumindest einem Betriebszustand einen Anschlag des zumindest einen Dämpfungselements 16a. Die zumindest eine Anschlagfläche 20a, 20a' ist zumindest im Wesentlichen konvex geformt. Beide Anschlagflächen 20a, 20a' sind zumindest im Wesentlichen konvex geformt.

Der erste Verbindungssteg 28a erstreckt sich in eine Richtung senkrecht zur Wischrichtung 32a, 34a und senkrecht zur Haupterstreckung des Wischgrundkörpers 12a weniger als 1 mm. Der erste Verbindungssteg 28a erstreckt sich beispielsweise 0,1 mm, insbesondere 0,2 mm oder 0,3 mm, in eine Richtung senkrecht zur Wischrichtung 32a, 34a und senkrecht zur Haupterstreckung des Wischgrundkörpers 12a.

Der zweite Verbindungssteg 30a weist in eine Richtung senkrecht zur Wischrichtung 32a, 34a und senkrecht zur Haupterstreckung des Wischgrundkörpers 12a im Wesentlichen eine gleiche maximale Erstreckung auf wie das Dämpfungselement 16a. Der zweite Verbindungssteg 30a weist in Wischrichtung 32a, 34a zumindest im Wesentlichen konkav geformte Außenflächen 36a, 36a' auf.

In den Figuren 3 bis 5 sind weitere Ausführungsbeispiele gezeigt.

Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in der Figur 1 und 2 nachgestellt. In dem Ausführungsbeispiel der Figuren 3 bis 5 ist der Buchstabe a durch die Buchstaben b bis d ersetzt.

Figur 3 zeigt einen Querschnitt einer Wischleisteneinheit 10b, insbesondere entlang einer Schnittebene senkrecht zur Haupterstreckungsrichtung der Wischleisteneinheit 10b. Das zumindest eine Dämpfungselement 16b ist in Richtung der zumindest einen Wischlippe 14b zumindest im Wesentlichen konkav geformt. Insbesondere ist eine der Wischlippe 14b zugewandte Außenfläche 50b, 50b' des Dämpfungselements 16b in Richtung der Wischlippe 14b im Wesentlichen konkav geformt. Insbesondere ist eine der Wischlippe 14b abgewandte Außenfläche 52b, 52b' des Dämpfungselements 16b in Richtung des Wischgrundkörpers 12b im Wesentlichen konvex geformt.

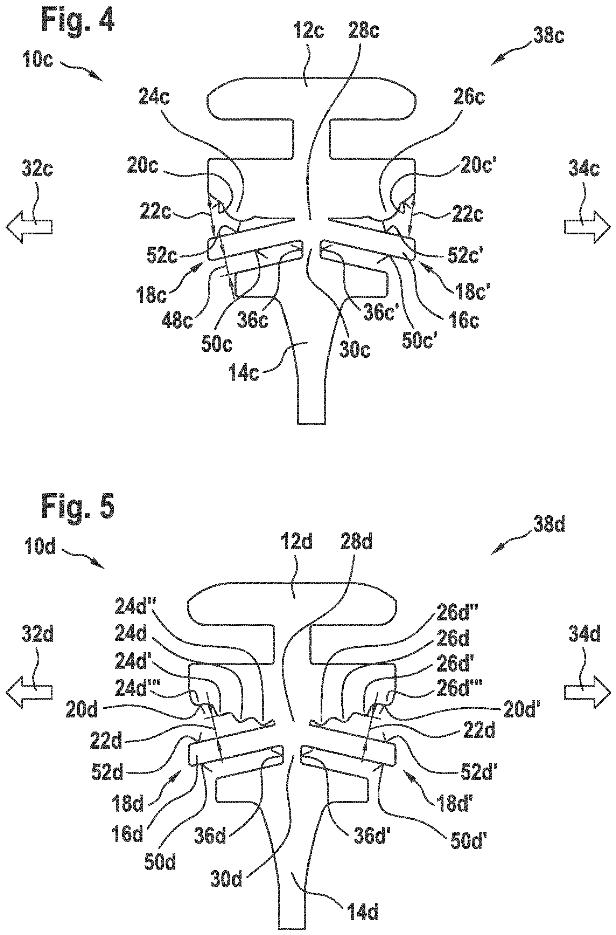

Figur 4 zeigt einen Querschnitt einer Wischleisteneinheit 10c, insbesondere entlang einer Schnittebene senkrecht zur Haupterstreckungsrichtung der Wischleisteneinheit 10c. Die Wischleisteneinheit 10c weist zumindest einen Fortsatz 24c auf. Der Fortsatz 24c ragt zumindest teilweise in Richtung zumindest einer Wischlippe 14c aus einer ersten Anschlagfläche 20c zumindest eines Wischgrundkörpers 12c. Der erste Fortsatz 24c ist von einem freien Ende des Wischgrundkörpers 12c, insbesondere der Anschlagfläche 20c, beabstandet angeordnet.

Die Wischleisteneinheit 10c weist zumindest einen weiteren Fortsatz 26c auf. Der weitere Fortsatz 26c ragt zumindest teilweise in Richtung der zumindest einen Wischlippe 14c aus einer zweiten Anschlagfläche 20c' des zumindest einen Wischgrundkörpers 12c.

Der Fortsatz 24c und/oder der weitere Fortsatz 26c sind einstückig, insbesondere aus dem gleichen Material wie etwa einem natürlichen oder künstlichen Elastomer, insbesondere einem Kunststoff und/oder Gummi, mit dem Wischgrundkörper 12c hergestellt.

Der weitere Fortsatz 26c ist von einem freien Ende des Wischgrundkörpers 12c, insbesondere der Anschlagfläche 20c', beabstandet angeordnet.

Der zumindest eine Fortsatz 24c und/oder weitere Fortsatz 26c erstreckt/ erstrecken sich zumindest im Wesentlichen über die gesamte Haupterstreckung des Wischgrundkörpers 12c.

Ein Abstand 22c zwischen dem zumindest einen Dämpfungselement 16c und dem zumindest einen Wischgrundkörper 12c nimmt zu einem freien Ende 18c, 18c' des zumindest einen Dämpfungselements 16c bis zu dem Fortsatz 24c oder dem weiteren Fortsatz 26c hin zu. Ein Abstand 22c zwischen dem zumindest einen Dämpfungselement 16c und dem zumindest einen Wischgrundkörper 12c nimmt von dem Fortsatz 24c oder dem weiteren Fortsatz 26c zu einem freien Ende 18c, 18c' des zumindest einen Dämpfungselements 16c hin zu.

Figur 5 zeigt einen Querschnitt einer erfindungsgmäßen Wischleisteneinheit 10d, insbesondere entlang einer Schnittebene senkrecht zur Haupterstreckungsrichtung der Wischleisteneinheit 10d.

An jeder der zumindest zwei Anschlagflächen 20d, 20d' des zumindest einen Wischgrundkörpers 12d sind zumindest zwei Fortsätze 24d, 24d', 24d", 24d‴ und/oder weitere Fortsätze 26d, 26d', 26d", 26d‴ angeordnet. An der ersten Anschlagfläche 20d des zumindest einen Wischgrundkörpers 12d sind vier Fortsätze 24d, 24d', 24d", 24d‴ angeordnet. An der zweiten Anschlagfläche 20d' des zumindest einen Wischgrundkörpers 12d sind vier weitere Fortsätze 26d, 26d', 26d", 26d‴ angeordnet. Die zumindest zwei Fortsätze 24d, 24d', 24d", 24d‴ und/oder weitere Fortsätze 26d, 26d', 26d", 26d‴ erstrecken sich an jeder Anschlagfläche 20d, 20d' in zumindest eine der Wischrichtungen 32d, 34d zusammen im Wesentlichen über die gesamte Erstreckung der jeweiligen Anschlagfläche 20d, 20d'.

Ein Fortsatz 24d‴ ist an einem freien Ende des Wischgrundkörpers 12d angeordnet. Ein weiterer Fortsatz 26d‴ ist an einem freien Ende des Wischgrundkörpers 12d angeordnet. Ein Fortsatz 24d" ist an einem dem ersten Verbindungssteg 28d zugewandten Ende der ersten Anschlagfläche 20d angeordnet. Ein weiterer Fortsatz 26d" ist an einem dem ersten Verbindungssteg 28d zugewandten Ende der zweiten Anschlagfläche 20d' angeordnet.

Die Fortsätze 24d, 24d', 24d", 24d‴ bilden eine wellenförmige erste Anschlagfläche 20d aus. Die weiteren Fortsätze 26d, 26d', 26d", 26d‴ bilden eine wellenförmige zweite Anschlagfläche 20d' aus.

Ein mathematisch über die wellenförmige Anschlagfläche 20d, 20d' gemittelter Abstand 22d zwischen dem zumindest einen Dämpfungselement 16d und dem zumindest einen Wischgrundkörper 12d nimmt zu einem freien Ende 18d, 18d' des zumindest einen Dämpfungselements 16d hin zu.

Die Fortsätze 24d, 24d', 24d", 24d‴ und/oder die weiteren Fortsätze 26d, 26d', 26d", 26d‴ sind einstückig, insbesondere aus dem gleichen Material wie etwa einem natürlichen oder künstlichen Elastomer, insbesondere einem Kunststoff und/oder Gummi, mit dem Wischgrundkörper 12d hergestellt.

## Patentansprüche

1. Wischleisteneinheit mit zumindest einer Wischlippe (14a; 14b; 14c; 14d), mit zumindest einem Wischgrundkörper (12a; 12b; 12c; 12d) und mit zumindest einem Dämpfungselement (16a; 16b; 16c; 16d), welches zwischen der zumindest einen Wischlippe (14a; 14b; 14c; 14d) und dem zumindest einen Wischgrundkörper (12a; 12b; 12c; 12d) angeordnet ist, und welches dazu vorgesehen ist, ein Umklappen der zumindest einen Wischlippe (14a; 14b; 14c; 14d) bei einem Wischvorgang zu dämpfen, wobei ein Abstand (22a; 22b; 22c; 22d) zwischen dem zumindest einen Dämpfungselement (16a; 16b; 16c; 16d) und dem zumindest einen Wischgrundkörper (12a; 12b; 12c; 12d) zu einem freien Ende (18a, 18a'; 18b, 18b'; 18c, 18c'; 18d, 18d') des zumindest einen Dämpfungselements (16a; 16b; 16c; 16d) hin zunimmt, und wobei der zumindest eine Wischgrundkörper (12a; 12b; 12c; 12d) auf einer der zumindest einen Wischlippe (14a; 14b; 14c; 14d) zugewandten Seite zumindest eine Anschlagfläche (20a, 20a'; 20b, 20b'; 20c, 20c'; 20d, 20d') aufweist, welche in zumindest einem Betriebszustand einen Anschlag des zumindest einen Dämpfungselements (16a; 16b; 16c; 16d) bildet, wobei die zumindest eine Anschlagfläche (20a, 20a'; 20b, 20b'; 20c, 20c'; 20d, 20d') zumindest im Wesentlichen konvex geformt ist, **dadurch gekennzeichnet, dass** an einer ersten Anschlagfläche (20c, 20c'; 20d, 20d') des zumindest einen Wischgrundkörpers (12c; 12d) und an einer zweiten Anschlagfläche (20c, 20c'; 20d, 20d') des zumindest einen Wischgrundkörpers (12c; 12d) jeweils zumindest zwei Fortsätze (24d, 24d', 24d", 24d‴) angeordnet sind, wobei jeder Fortsatz (24d, 24d', 24d", 24d‴) aus seiner jeweiligen Anschlagfläche (20c, 20c'; 20d, 20d') des mindestens einen Wischgrundkörpers (12c; 12d) zumindest teilweise in Richtung der mindestens einen Wischlippe (14c; 14d) ragt.

2. Wischleisteneinheit nach Anspruch 1, **dadurch gekennzeichnet, dass** das zumindest eine Dämpfungselement (16b) in Richtung der zumindest einen Wischlippe (14b) zumindest im Wesentlichen konkav geformt ist.

3. Wischleisteneinheit nach Anspruch 1 oder 2, **dadurch gekennzeichnet, dass** sich die zumindest zwei Fortsätze (24d, 24d') und/oder weitere Fortsätze (26d, 26d') an jeder Anschlagfläche (20d, 20d') in Wischrichtung (32d, 34d) zusammen im Wesentlichen über eine gesamte Erstreckung der jeweiligen Anschlagfläche (20d, 20d') erstrecken.

4. Wischleisteneinheit nach einem der Ansprüche 1 bis 3, **dadurch gekennzeichnet, dass** sich der zumindest eine Fortsatz (24c, 24c'; 24d, 24d') und/oder weitere Fortsatz (26c, 26c'; 26d, 26d') zumindest im Wesentlichen über eine gesamte Haupterstreckung des Wischgrundkörpers (12c, 12d) erstreckt.

5. Wischleisteneinheit nach einem der vorhergehenden Ansprüche, **gekennzeichnet, durch** zumindest zwei Verbindungsstege (28a, 30a; 28b, 30b; 28c, 30c; 28d, 30d), wobei ein erster Verbindungsteg (28a; 28b; 28c; 28d) den zumindest einen Wischgrundkörper (12a; 12b; 12c; 12d) mit dem zumindest einen Dämpfungselement (16a; 16b; 16c; 16d) verbindet und ein zweiter Verbindungssteg (30a; 30b; 30c; 30d) das zumindest eine Dämpfungselement (16a; 16b; 16c; 16d) mit der zumindest einen Wischlippe (14a; 14b; 14c; 14d) verbindet, wobei der erste Verbindungssteg (28a; 28b; 28c; 28d) sich in eine Richtung senkrecht zu einer Wischrichtung (32a, 34a; 32b, 34b; 32c, 34c; 32d, 34d) und senkrecht zu einer Haupterstreckung des Wischgrundkörpers (12a; 12b; 12c; 12d) weniger als 1 mm erstreckt.

6. Wischleisteneinheit nach Anspruch 5, **dadurch gekennzeichnet, dass** der zweite Verbindungssteg (30a; 30b; 30c; 30d) in Wischrichtung (32a, 34a; 32b, 34b; 32c, 34c; 32d, 34d) zumindest im Wesentlichen konkav geformte Außenflächen (36a, 36a'; 36b, 36b'; 36c, 36c'; 36d, 36d') aufweist.

7. Wischblatt mit zumindest einer Wischleisteneinheit (10a; 10b; 10c; 10d) nach einem der vorhergehenden Ansprüche.

## Claims

1. Wiper-strip unit having at least one wiper lip (14a; 14b; 14c; 14d), having at least one wiper main body (12a; 12b; 12c; 12d), and having at least one damping element (16a; 16b; 16c; 16d) which is arranged between the at least one wiper lip (14a; 14b; 14c; 14d) and the at least one wiper main body (12a; 12b; 12c; 12d) and which is intended for damping a folding-over of the at least one wiper lip (14a; 14b; 14c; 14d) during a wiping process, wherein a distance (22a; 22b; 22c; 22d) between the at least one damping element (16a; 16b; 16c; 16d) and the at least one wiper main body (12a; 12b; 12c; 12d) increases in the direction of a free end (18a, 18a'; 18b, 18b'; 18c, 18c'; 18d, 18d') of the at least one damping element (16a; 16b; 16c; 16d), and wherein, on a side facing towards the at least one wiper lip (14a; 14b; 14c; 14d), the at least one wiper main body (12a; 12b; 12c; 12d) has at least one stop surface (20a, 20a'; 20b, 20b'; 20c, 20c'; 20d, 20d') which, in at least one operating state, forms a stop for the at least one damping element (16a; 16b; 16c; 16d), wherein the at least one stop surface (20a, 20a'; 20b, 20b'; 20c, 20c'; 20d, 20d') is of at least substantially convex shape, **characterized in that** in each case at least two extensions (24d, 24d', 24d", 24d‴) are arranged on a first stop surface (20c, 20c'; 20d, 20d') of the at least one wiper main body (12c; 12d) and on a second stop surface (20c, 20c'; 20d, 20d') of the at least one wiper main body (12c; 12d), wherein each extension (24d, 24d', 24d", 24d‴) projects at least partially in the direction of the at least one wiper lip (14c; 14d) from its respective stop surface (20c, 20c'; 20d, 20d') of the at least one wiper main body (12c; 12d).

2. Wiper-strip unit according to Claim 1, **characterized in that** the at least one damping element (16b) is of at least substantially concave shape in the direction of the at least one wiper lip (14b).

3. Wiper-strip unit according to Claim 1 or 2, **characterized in that** the at least two extensions (24d, 24d') and/or further extensions (26d, 26d'), on each stop surface (20d, 20d'), together extend substantially over an entire extent of the respective stop surface (20d, 20d') in the wiping direction (32d, 34d).

4. Wiper-strip unit according to one of Claims 1 to 3, **characterized in that** the at least one extension (24c, 24c'; 24d, 24d') and/or further extension (26c, 26c'; 26d, 26d') extends at least substantially over an entire main extent of the wiper main body (12c, 12d).

5. Wiper-strip unit according to one of one of the preceding claims, **characterized by** at least two connecting webs (28a, 30a; 28b, 30b; 28c, 30c; 28d, 30d), wherein a first connecting web (28a; 28b; 28c; 28d) connects the at least one wiper main body (12a; 12b; 12c; 12d) to the at least one damping element (16a; 16b; 16c; 16d) and a second connecting web (30a; 30b; 30c; 30d) connects the at least one damping element (16a; 16b; 16c; 16d) to the at least one wiper lip (14a; 14b; 14c; 14d), wherein the first connecting web (28a; 28b; 28c; 28d) extends less than 1 mm in a direction perpendicular to a wiping direction (32a, 34a; 32b, 34b; 32c, 34c; 32d, 34d) and perpendicular to a main extent of the wiper main body (12a; 12b; 12c; 12d).

6. Wiper-strip unit according to Claim 5, **characterized in that** the second connecting web (30a; 30b; 30c; 30d) has outer surfaces (36a, 36a'; 36b, 36b'; 36c, 36c'; 36d, 36d') of at least substantially concave shape in the wiping direction (32a, 34a; 32b, 34b; 32c, 34c; 32d, 34d).

7. Wiper blade having at least one wiper-strip unit (10a; 10b; 10c; 10d) according to one of the preceding claims.

## Revendications

1. Unité formant lame d'essuyage avec au moins une lèvre d'essuyage (14a ; 14b ; 14c ; 14d), avec au moins un corps de base d'essuyage (12a ; 12b ; 12c ; 12d) et avec au moins un élément d'amortissement (16a ; 16b ; 16c ; 16d), qui est disposé entre l'au moins une lèvre d'essuyage (14a ; 14b ; 14c ; 14d) et l'au moins un corps de base d'essuyage (12a ; 12b ; 12c ; 12d), et qui est prévu pour empêcher un rabattement de l'au moins une lèvre d'essuyage (14a ; 14b ; 14c ; 14d) lors d'un processus d'essuyage, une distance (22a ; 22b ; 22c ; 22d) entre l'au moins un élément d'amortissement (16a ; 16b ; 16c ; 16d) et l'au moins un corps de base d'essuyage (12a ; 12b ; 12c ; 12d) par rapport à une extrémité libre (18a, 18a' ; 18b, 18b' ; 18c, 18c' ; 18d, 18d') de l'au moins un élément d'amortissement (16a ; 16b ; 16c ; 16d), et l'au moins un corps de base d'essuyage (12a ; 12b ; 12c ; 12d) augmentant sur une face de l'au moins une lèvre d'essuyage (14a ; 14b ; 14c ; 14d) présente au moins une surface de butée (20a, 20a' ; 20b, 20b' ; 20c, 20c' ; 20d, 20d') qui, dans au moins un état de fonctionnement, constitue une butée de l'au moins un élément d'amortissement (16a ; 16b ; 16c ; 16d), l'au moins une surface de butée (20a, 20a' ; 20b, 20b' ; 20c, 20c' ; 20d, 20d') étant formée de façon au moins sensiblement convexe, **caractérisée en ce que** sur une première surface de butée (20c, 20c' ; 20d, 20d') de l'au moins un corps de base d'essuyage (12c ; 12d) et sur une deuxième surface de butée (20c, 20c' ; 20d, 20d') de l'au moins un corps de base d'essuyage (12c ; 12d), au moins deux prolongements (24d, 24d', 24d'', 24d'''') sont respectivement agencés, chaque prolongement (24d, 24d', 24d", 24dʺʺ) dépassant de sa surface de butée respective (20c, 20c' ; 20d, 20d') de l'au moins un corps de base d'essuyage (12c ; 12d) au moins partiellement en direction de l'au moins une lèvre d'essuyage (14c ; 14d).

2. Unité formant lame d'essuyage selon la revendication 1, **caractérisée en ce que** l'au moins un élément d'amortissement (16b) a une forme au moins sensiblement concave en direction de l'au moins une lèvre d'essuyage (14b).

3. Unité formant lame d'essuyage selon la revendication 1 ou 2, **caractérisée en ce que** les au moins deux prolongements (24d, 24d') et/ou d'autres prolongements (26d, 26d') sur chaque surface de butée (20d, 20d') s'étendent ensemble dans la direction d'essuyage (32d, 34d) sensiblement sur toute une extension de la surface de butée respective (20d, 20d').

4. Unité formant lame d'essuyage selon l'une des revendications 1 à 3, **caractérisée en ce que** l'au moins un prolongement (24c, 24c' ; 24d, 24d') et/ou autre prolongement (26c, 26c' ; 26d, 26d') s'étend au moins sensiblement sur toute une extension principale du corps de base d'essuyage (12c, 12d).

5. Unité formant lame d'essuyage selon l'une quelconque des revendications précédentes, **caractérisée par** au moins deux ponts de liaison (28a, 30a ; 28b, 30b ; 28c, 30c ; 28d, 30d), un premier pont de liaison (28a ; 28b ; 28c ; 28d) reliant l'au moins un corps de base d'essuyage (12a ; 12b ; 12c ; 12d) audit au moins un élément amortisseur (16a ; 16b ; 16c ; 16d) et un deuxième pont de liaison (30a ; 30b ; 30c ; 30d) relie l'au moins un élément d'amortissement (16a ; 16b ; 16c ; 16d) à l'au moins une lèvre d'essuyage (14a ; 14b ; 14c ; 14d), le premier pont de liaison (28a ; 28b ; 28c ; 28d) s'étend dans une direction perpendiculaire à une direction d'essuyage (32a, 34a ; 32b, 34b ; 32c, 34c ; 32d, 34d) et perpendiculaire à une extension principale du corps de base d'essuyage (12a ; 12b ; 12c ; 12d) inférieure à 1 mm.

6. Unité formant lame d'essuyage selon la revendication 5, **caractérisée en ce que** le deuxième pont de liaison (30a ; 30b ; 30c ; 30d) présente, dans la direction d'essuyage (32a, 34a ; 32b, 34b ; 32c, 34c ; 32d, 34d), des surfaces extérieures (36a, 36a' ; 36b, 36b' ; 36c, 36c' ; 36d, 36d') de forme au moins sensiblement concave.

7. Balai d'essuie-glace comportant au moins une unité formant lame d'essuyage (10a ; 10b ; 10c ; 10d) selon l'une quelconque des revendications précédentes.
